# EUROPÄISCHE PATENTSCHRIFT

(11) **EP 0 542 805 B1**
(45) Veröffentlichungstag und Bekanntmachung des Hinweises auf die Patenterteilung: **19.01.1994**
(21) Anmeldenummer: 91914048.3
(22) Anmeldetag: 29.07.1991
(51) Int. Cl.: F01N 3/28, B01J 35/04

(54) **WABENKÖRPER MIT QUERSCHNITTSBEREICHEN UNTERSCHIEDLICHER KANALGRÖSSEN, INSBESONDERE KATALYSATOR-TRÄGERKÖRPER**
HONEYCOMB BODY WITH CHANNELS HAVING DIFFERENT CROSS-SECTIONAL DIMENSIONS, IN PARTICULAR CATALYZER BEARING BODY
CORPS EN NID D'ABEILLES AYANT DES CANAUX A SECTIONS TRANSVERSALES DIVERSES, NOTAMMENT CORPS DE SUPPORT DE CATALYSEUR

(30) Priorität: 10.08.1990 DE 4025434
(43) Veröffentlichungstag der Anmeldung: 26.05.1993
(73) Patentinhaber: Emitec Gesellschaft für Emissionstechnologie mbH, 53797 Lohmar (DE)
(72) Erfinder: RECK, Alfred, D-5067 Kürten 4 (DE)
(74) Vertreter: Kahlhöfer, Hermann, Dipl.-Phys.
(86) Internationale Anmeldenummer: EP9101423
(87) Internationale Veröffentlichungsnummer: WO9202717

(56) Entgegenhaltungen:
- EP-A- 0 336 106
- EP-B- 0 245 737
- WO-A-90/03220
- PATENT ABSTRACTS OF JAPAN, vol. 12, No. 14 (M-659)(2861) 16. Januar 1988 & JP-A-62 174 525 (TOYOTA MOTOR CORP) 31. Juli 1987

## Beschreibung

Die vorliegende Erfindung betrifft einen Wabenkörper, insbesondere Katalysator-Trägerkörper für Abgassysteme von Verbrennungsmotoren, mit von einem Fluid in einer Strömungsrichtung durchströmbaren Kanälen, der aus einer Vielzahl von einzelnen Blechen aufgebaut ist, von welchen mindestens ein Teil zur Bildung der Kanäle etwa parallel zur Strömungsrichtung verlaufende Strukturen aufweist.

Solche Wabenkörper sind z. B. aus der EP-C-0 245 737 oder aus der EP-C-0 245 738 bekannt. Auch aus der WO-90/03220 ist ein solcher Wabenkörper bekannt, der aus mindestens drei miteinander verschlungenen Stapeln von Blechen aufgebaut ist.

Allen diesen Körpern ist gemeinsam, daß sie aus einer Vielzahl von einzelnen Blechen bestehen, was z. B. den Vorteil mit sich bringt, daß die Enden der Bleche einzeln befestigt werden können, wodurch sehr stabile Körper entstehen, die zusätzlich noch in ganz verschiedenen Querschnittsformen leicht herstellbar sind. Grundsätzlich ist auch das einfache Aufeinanderschichten von geraden Blechlagen in einer gewünschten Form möglich, was ebenfalls aus dem Stand der Technik bekannt ist.

Bei der Verwendung solcher Wabenkörper in einem strömenden Fluid kann aufgrund der Geometrie eines Rohrleitungssystems nicht immer sichergestellt werden, daß ein solcher Wabenkörper über die gesamte Querschnittsfläche gleichmäßig angeströmt wird. Dies ist inbesondere in Abgassystemen von Kraftfahrzeugen ein Problem, da dort keine beliebigen Baulängen und Einbauten zur Vergleichmäßigung der Strömung möglich sind. So kann es beispielsweise vorkommen, daß ein solcher Wabenkörper in seinem Zentralbereich mit höherer Strömungsgeschwindigkeit angeströmt wird als in seinen äußeren Bereichen, was zu einer ungleichmäßigen Ausnutzung seines Volumens, beispielsweise für katalytische Reaktionen, führt. Es sind auch Anwendungsfälle bekannt, bei denen die Anströmung über einen schnecken- oder spiralförmigen Einlaß mit einem Drall erfolgt. Hier kann es vorkommen, daß die äußeren Bereiche mit größerer Geschwindigkeit angeströmt werden als der innere Bereich eines Wabenkörpers.

Für den erstgenannten Fall wird in der EP-A-0 336 106 bereits vorgeschlagen, zur Vergleichmäßigung der Beaufschlagung mit einer Fluidströmung den Wabenkörper so auszubilden, daß die Querschnitte der Kanäle mit zunehmendem radialen Abstand von der Mittelachse größer werden. Ausgeführt wird dies anhand eines spiralig aus einem glatten und einem gewellten Blech aufgewickelten Körpers, bei dem die Wellhöhe und Teilung des gewellten Bleches stufenweise oder kontinuierlich zunimmt. Ein solcher Aufbau ist allerdings fertigungstechnisch sehr schwierig zu verwirklichen, da eine kontinuierlich über einer Bandlänge von beispielsweise 5 m zunehmende Wellhöhe äußerst schwierig reproduzierbar herzustellen ist und eine stufenweise zunehmende Wellhöhe das Wechseln von Wellwalzen erfordert und Diskontinuitäten in dem aufzuwickelnden Körper hervorrufen kann.

Aufgabe der vorliegenden Erfindung ist es daher, einen Wabenkörper anzugeben, welcher leichter mit hoher Qualität und reproduzierbar herstellbar ist und bei dem gleichzeitig außen und innen unterschiedliche Kanalquerschnitte vorherrschen. Gleichzeitig soll der Wabenkörper gegen mechanische Belastungen stabil sein und eine Anpassung der Verteilung der Kanalgrößen über die Querschnittsfläche nach unterschiedlichsten Anforderungen zulassen.

Zur Lösung dieser Aufgabe dient ein Wabenkörper mit von einem Fluid in einer Strömungsrichtung durchströmbaren Kanälen, aufgebaut aus einer Vielzahl von einzelnen Blechen, von welchen mindestens ein Teil etwa parallel zur Strömungsrichtung verlaufende Strukturen aufweist, wobei erfindungsgemäß die Strukturen zumindest bei einem Teil dieser strukturierten Bleche sich kontinuierlich oder stufenweise verändernde Strukturhöhen und/oder Strukturbreiten zur Bildung von Kanälen mit unterschiedlichen Querschnittsflächen aufweisen. Entscheidend für die vorliegende Erfindung ist es, daß der Körper aus einer Vielzahl von einzelnen Blechen besteht, die zumindest teilweise nicht in Umfangsrichtung verlaufen und welche ihrerseits dadurch nicht besonders lang sein müssen. So können die Bleche leichter mit sich kontinuierlich oder stufenweise verändernden Strukturhöhen und/oder Strukturbreiten hergestellt werden, beispielsweise durch Wellwalzen mit sich ändernden Strukturhöhen. An dem übrigen Herstellungsprozeß ändert sich gegenüber dem Stand der Technik fast nichts. Die Bleche können zu einem oder mehreren Stapeln geschichtet und dann wie in den oben zitierten Schriften näher beschrieben, zu einem Wabenkörper verschlungen und gegebenenfalls untereinander und/oder mit einem Mantelrohr durch ein geeignetes fügetechnisches Verfahren, insbesondere Hartlöten, verbunden werden. So können Körper mit einem runden, einem ovalen, einem elliptischen oder einem unregelmäßigen Querschnitt ganz analog zum Stand der Technik hergestellt werden, nur mit dem Unterschied, daß zusätzlich unterschiedliche Kanalquerschnitte beliebig über die Querschnittsfläche verteilt werden können.

Um die zu verwendenden Wellwalzen oder anderen Mittel zur Strukturierung der Bleche in einer wirtschaftlich vernünftigen Größe zu halten, ist es vorteilhaft, daß die einzelnen Bleche eine maximale Länge haben, die dem zweifachen
Querschnittsumfang des Wabenkörpers entspricht. Noch günstiger ist es, wenn die Bleche sogar eine kleinere Länge als die des Querschnittsumfangs haben. In konkreten Maßen bedeutet dies für typische Größen von Wabenkörpern, daß die einzelnen Bleche kürzer als 50 cm, vorzugsweise kürzer als 30 cm sind. (Mit der Länge eines strukturierten Bleches ist dessen Länge nach der Strukturierung gemeint).

Die vorliegende Erfindung läßt prinzipiell jedwede Verteilungen, insbesondere auch nicht konzentrische, der unterschiedlichen Kanalquerschnitte über die Querschnittsfläche des Wabenkörpers zu. Es gibt dabei zwei besondere Anwendungsfälle. Einerseits können insbesondere Körper gebildet werden, bei denen in einem äußeren Bereich des Wabenkörpers kleinere Kanäle vorherrschen und in einem inneren Bereich größere Kanäle. Diese Anordnung ist besonders für mit einem Drall angeströmte Wabenkörper zum Ausgleich der unterschiedlichen Strömungsgeschwindigkeiten von Vorteil. Eine andere bevorzugte Möglichkeit ist die, bei der größere Kanäle in einem äußeren Bereich des Wabenkörpers vorherrschen und in einem inneren Bereich kleinere Kanäle. Die Vorteile einer solchen Ausführung sind in der EP-A-0 336 106 beschrieben.

Obwohl die Erfindung sich auf beliebige aus einer Vielzahl von Blechen geschichtete Wabenkörper bezieht, sind doch die nach dem Stand der Technik bekannten Formen mit etwa S-förmigen Blechen wegen ihrer sonstigen Stabilitätseigenschaften besonders gut geeignet. Unter "etwa S-förmig" ist hier insbesondere eine Ausbildung zu verstehen, bei der die Enden eines Stapels von Blechen gegensinnig miteinander verschlungen sind.

Auch eine nach dem Stand der Technik bekannte Form aus drei oder mehr miteinander verschlungenen Blechstapeln, von denen mindestens drei jeweils um Knicklinien geknickt sind, ist besonders flexibel und für eine Anwendung der vorliegenden Erfindung geeignet. Einzelheiten hierzu sind in der WO-90/03220 beschrieben, weshalb nähere Ausführungen hierzu nicht erforderlich erscheinen.

Bei den hier als besonders bevorzugt beschriebenen Ausführungsformen sind die strukturierten Bleche bezüglich ihres mittleren Bereiches im allgemeinen, wenn auch nicht notwendigerweise symmetrisch ausgestaltet, so daß sie entweder an den Endbereichen kleinere Strukturhöhen und/oder Strukturbreiten aufweisen als im mittleren Bereich oder umgekehrt, je nach der gewünschten Art des Wabenkörpers. Grundsätzlich ist jedoch jede andere Verteilung der Strukturhöhen und/oder Strukturbreiten über die Länge der Bleche möglich, da von einem erfindungsgemäßen Wabenkörper nicht gefordert werden muß, daß alle Kanäle in einem bestimmten Querschnittsbereich gleich groß sein müssen. In diesem Sinne ist auch das Wort "vorherrschen" zu verstehen. Es bedeutet nicht, daß alle Kanäle in diesem Bereich die gleiche Größe haben sollen, sondern lediglich, daß eine bestimmte Größe häufiger vorkommen soll als eine andere. So können durchaus einzelne der gewellten Blechlagen durchgehend die gleiche Strukturhöhe aufweisen, solange nur der gewünschte Effekt durch eine genügende Anzahl von Blechlagen mit unterschiedlichen Strukturhöhen erreicht wird.

Im allgemeinen werden für Wabenkörper abwechselnd angeordnete glatte und gewellte Bleche verwendet, was auch für die vorliegende Erfindung günstig ist. Andere Ausführungsformen, bei denen alle Bleche Wellungen aufweisen oder die an sich glatten Blechlagen mit einer zusätzlichen parallel oder quer zur Strömungsrichtung verlaufenden Mikrostruktur versehen sind, können ebenfalls angewendet werden.

Es sei auch darauf hingewiesen, daß auch Wabenkörper, wie sie im Prinzip beispielsweise in der EP-C-0 245 736 beschrieben sind durch Verwendung von gewellten Blechen mit sich ändernder Strukturhöhe und/oder Strukturbreite modifiziert werden können. Auf diese Weise entstehen Wabenkörper, deren Blechlagen nicht mehr ideal den Formen einer Kreisevolvente folgen, sondern zumindest an Stellen, wo sich die Wellhöhen ändern, von dieser Form abweichen. Die grundsätzlichen Vorteile dieser Anordnung bleiben jedoch erhalten.

Ausführungsbeispiele der Erfindung werden im folgenden anhand der Zeichnung näher erläutert. Es zeigen jeweils im Querschnitt und teilweise in schematisierter Form
Figur 1 einen Teil eines Blechstapels, wie er für Wabenkörper nach Figur 5 Verwendung findet,
Figur 2 einen Teil eines Blechstapels, wie er für Wabenkörper nach Figur 6 Verwendung findet,
Figur 3 eine Blechlage mit zwei unterschiedlichen Wellhöhen und Wellbreiten und einem kontinuierlichen Übergang zwischen beiden,
Figur 4 eine Blechlage mit sich kontinuierlich ändernder Wellhöhe und Wellbreite,
Figur 5 einen Wabenkörper mit in einem äußeren Bereich größeren Kanalquerschnitten als in einem inneren Bereich und
Figur 6 einen elliptischen Wabenkörper mit im Zentralbereich größeren Kanalquerschnitten als in einem äußeren Bereich.

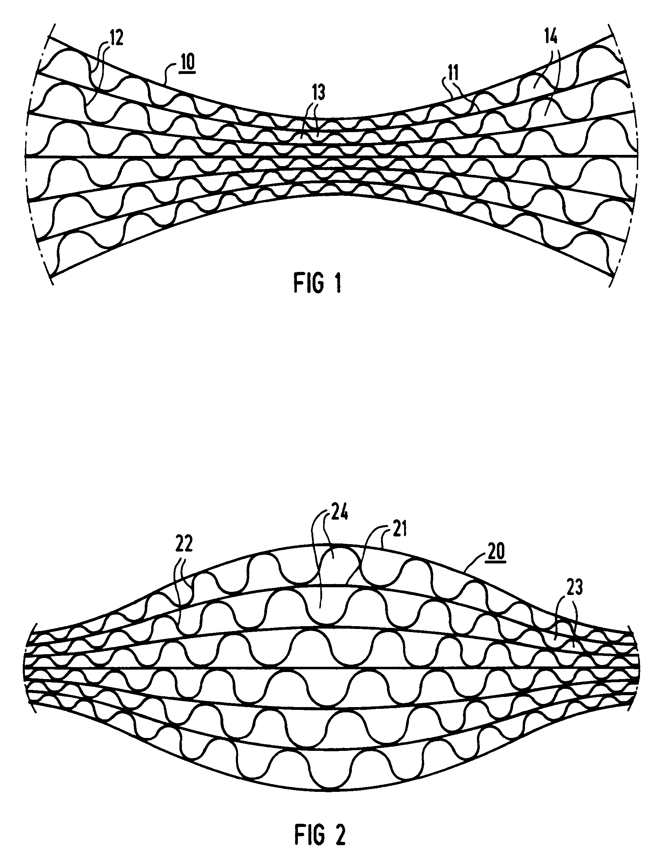

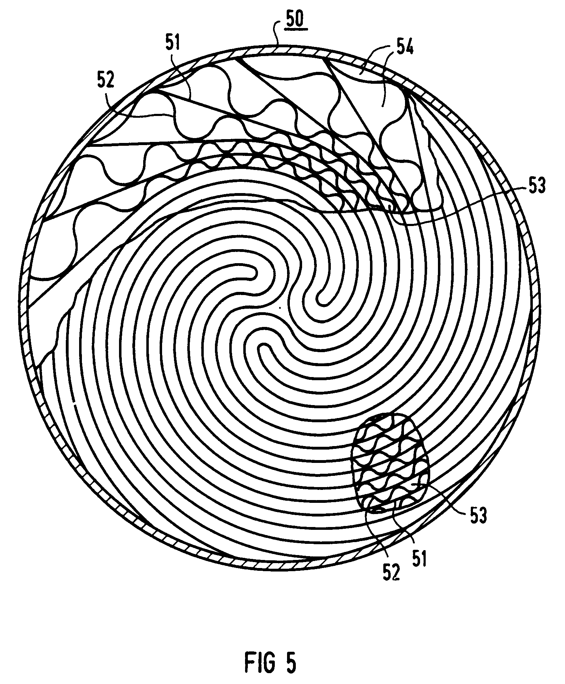

Figur 1 zeigt einen Stapel 10 aus abwechselnd angeordneten glatten 11 und gewellten 12 Blechen. Die Länge des Stapels, die Größe und die Zahl der Bleche sind nicht maßstäblich, sondern soll nur zur prinzipiellen Erläuterung dienen. Die gewellten Bleche 12 weisen in ihrem mittleren Bereich eine kleinere Wellhöhe und Wellbreite auf als in ihren äußeren Bereichen, so daß sich im mittleren Bereich Kanäle 13 mit kleinerer Querschnittsfläche ergeben als im äußeren Bereich, wo die Kanäle 14 eine größere Querschnittsfläche aufweisen. Die Enden eines solchen Stapels 10 lassen sich gegensinnig verschlingen, so daß alle Bleche annähernd dem Verlauf eines S folgen, wodurch sich Wabenkörper verschiedener Querschnitte herstellen lassen. Hierbei ändert sich nichts Grundsätzliches gegenüber dem Stand der Technik, bei dem das Verschlingen solcher Blechstapel für aus parallelen Lagen bestehende Stapel bekannt ist. Aus mehreren solchen Stapeln 10 läßt sich, wenn diese in ihrem mittleren Bereich um eine Knicklinie geknickt werden, auch ein Körper herstellen, wie er beispielhaft in Figur 5 im Querschnitt dargestellt ist. Auch hier ändert sich gegenüber dem bekannten Herstellungsprinzip für parallele Blechlagen fertigungstechnisch wenig.

Figur 2 zeigt den zu Figur 1 entgegengesetzt gelagerten Fall eines Blechstapels 20, bei dem im mittleren Bereich Kanäle 24 mit größerer Querschnittsfläche und in den äußeren Bereichen Kanäle 23 mit kleinerer Querschnittsfläche auftreten. Auch dieser Stapel ist aus glatten Blechen 21 und aus gewellten Blechen 22 aufgebaut, wobei die Wellhöhen und Wellbreiter der gewellten Bleche 22 im mittleren Bereich größer als in den äußeren Bereichen sind. Auch die Enden eines solchen Stapels lassen sich gegensinnig verschlingen, um beispielsweise einen Wabenkörper, wie in Figur 6 dargestellt, auszufüllen. Auch der Aufbau von Wabenkörpern aus mehreren solchen Stapeln analog zum Stand der Technik ist möglich.

Es sei darauf hingewiesen, daß ein Stapel von Blechen für erfindungsgemäße Wabenkörper durchaus auch gewellte Bleche mit durchgehend gleicher Wellhöhe und Wellbreite enthalten kann, insbesondere an der Ober- und Unterseite des Stapels. Auch ist es möglich, Wabenkörper aus Blechstapeln aufzubauen, welche unsymmetrisch bezüglich ihres mittleren Bereiches sind, so daß in einem Endbereich des Stapels andere Kanalquerschnitte vorliegen als in dem anderen Endbereich. Auf diese Weise lassen sich Wabenkörper mit nahezu beliebiger Verteilung der mittleren Kanalquerschnitte über die Querschnittsfläche herstellen, was für unsymmetrisch angeströmte Wabenkörper von Vorteil sein kann.

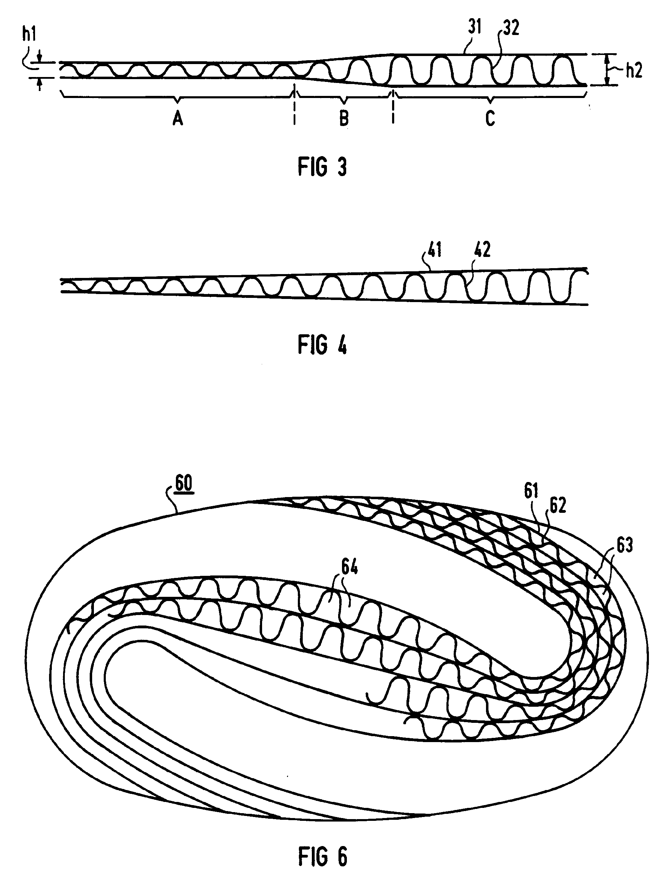

Prinzipiell für den Aufbau erfindungsgemäßer Wabenkörper geeignete Bleche sind schematisch in den Figuren 3 und 4 dargestellt. In Figur 3 hat das zwischen zwei glatten Blechlagen 31 dargestellte gewellte Blech 32 in dem Bereich A eine kleine Wellhöhe hl und geht in dem Ubergangsbereich B zu einer größeren Wellhöhe h2 über, welche sich im Bereich C fortsetzt.

In Figur 4 hat das zwischen zwei glatten Blechlagen 41 dargestellte gewellte Blech 42 eine kontinuierlich von links nach rechts zunehmende Wellhöhe.

Die in den Figuren 3 und 4 dargestellten Ausführungsformen können an jeweils einem ihrer Enden symmetrisch verlängert werden, um Bleche wie in den Figuren 1 und 2 dargestellt zu bilden. Sie können auch unsymmetrisch oder mit jeweils konstanter Wellhöhe an ihren Enden weitergeführt werden, je nach den Anforderungen an den zu bildenden Wabenkörper. Der Unterschied zwischen den kleinen und großen Wellhöhen und die Zahl der Bereiche mit unterschiedlichen Wellhöhen ist ebenfalls in weiten Grenzen wählbar. Aus fertigungstechnischen Gründen wird jedoch eher eine kontinuierlich zunehmende Wellhöhe oder ein Blech mit nur wenigen unterschiedlichen Wellhöhen in Betracht kommen. Sinnvoll kann ein Verhältnis der Wellhöhen h1:h2 von 1:2 bis 1:10, vorzugsweise etwa 1:4 sein. Mit dem bevorzugten Verhältnis lassen sich beispielsweise Wabenkörper bauen, welche im Bereich der kleinen Kanalquerschnitte etwa 400 cpsi (Kanäle pro Quadratinch) aufweisen, während sie im Bereich der großen Kanalquerschnitte etwa 100 cpsi haben.

Bei den hier beschriebenen Ausführungsbeispielen wurde von Wellungen ausgegangen, die mit einer Evolventenverzahnung herstellbar sind. Bei solchen etwa sinusförmigen Wellungen geht eine Vergrößerung der Wellhöhe immer mit einer entsprechenden Vergrößerung der mittleren Wellbreite (entspricht der halben Teilung) einher. Ein solcher Zusammenhang ist für die vorliegende Erfindung zwar wegen der günstigen hydraulischen Querschnitte solcher Kanalformen vorteilhaft, jedoch nicht zwingend. Die erfindungsgemäße Verteilung der Kanalquerschnitte kann auch nur durch Veränderung der Wellbreiten (was parallele glatte Blechlagen zur Folge hat) oder nur durch Veränderung der Wellhöhen (was durch unterschiedlich tiefes Ineinandergreifen von Wellwalzen vorteilhaft herstellbar ist) erreicht werden. Auch jede Zwischenlösung ist möglich.

Figur 5 zeigt einen Querschnitt durch einen Wabenkörper, der aus drei Blechstapeln aufgebaut ist, wobei die Blechstapel in einem Zentralbereich des Wabenkörpers um Knicklinien geknickt sind. Die prinzipielle Herstellungsweise und der Aufbau eines solchen Wabenkörpers sind in der o. g. WO-90/03220 beschrieben. Der untere Teil des dargestellten Wabenkörpers entspricht auch genau dem dort bekannten Aufbau aus glatten 51 und gewellten Blechen 52, welche etwa evolventenförmig verlaufen und Kanäle 53 bilden. Im oberen Bereich zeigt der dargestellte Wabenkörper 50 jedoch eine erfindungsgemäß geänderte Ausführungsform (durch eine gebrochene Linie von dem bekannten Aufbau getrennt) mit nach außen zunehmenden Querschnitten der Kanäle 54. Die glatten 51 und gewellten 52 Bleche können an einem Mantelrohr 55 fügetechnisch befestigt sein, vorzugsweise durch Hartlöten. Auch untereinander können die Bleche in an sich bekannter Weise verbunden sein, so daß der Wabenkörper 50 die gleiche Stabilität aufweist wie die nach dem Stand der Technik bekannten, mit evolventenförmig verlaufenden Blechen ausgefüllten Wabenkörper. Fertigungstechnisch entsteht ein solcher Wabenkörper 50 aus drei oder mehr Blechstapeln gemäß Figur 1, wobei zumindest ein Teil der gewellten Bleche unterschiedliche Wellhöhen aufweist. Auch aus Stapeln gemäß Figur 2 lassen sich derartige Wabenkörper aufbauen. Es sei auch darauf hingewiesen, daß dabei keineswegs eine Beschränkung auf runde Querschnitte erforderlich ist, sondern auch ovale, elliptische oder unregelmäßige Querschnitte mit Blechen unterschieglicher Wellhöhe ausgefüllt werden können.

Figur 6 zeigt am Beispiel einer elliptischen Querschnittsform, wie sich aus einem Stapel gemäß Figur 2 durch gegensinniges Verschlingen der Stapelenden ein Wabenkörper mit etwa S-förmigen Blechlagen aufbauen läßt. Dieser Wabenkörper 60 besteht aus etwa S-förmig verlaufenden glatten 61 und gewellten 62 Blechen, welche im Außenbereich Kanäle 63 mit kleinen Querschnitten und im inneren Bereich Kanäle 64 mit großen Querschnitten bilden. Zur Vervollständigung des Wabenkörpers 60 gehören noch weitere, nicht dargestellte glatte und gewellte Bleche, wobei die gewellten Bleche durchgehend die gleiche Wellhöhe aufweisen. Auch mit etwa S-förmig verschlungenen Blechen lassen sich runde, ovale elliptische Querschnitte gut ausfüllen, wobei dies sowohl mit Stapeln nach Figur 1 wie auch mit Stapeln nach Figur 2 möglich ist, je nachdem, ob innen oder außen die größeren Kanalquerschnitte gewünscht werden.

Die vorliegende Erfindung hat besondere Bedeutung für ungleichmäßig angeströmte Katalysator-Trägerkörper in Abgasanlagen von Kraftfahrzeugen, wo durch eine entsprechende Verteilung der Kanalquerschnitte über die angeströmte Querschnittsfläche des Wabenkörpers eine gleichmäßigere Ausnutzung des katalytisch aktiven Volumens erreicht werden kann.

## Patentansprüche

1. Wabenkörper, insbesondere Katalysator-Trägerkorper für Abgassysteme von Verbrennungsmotoren, mit von einem Fluid in einer Strömungsrichtung durchströmbaren Kanälen (13, 14; 23, 24; 53, 54; 63, 64), aufgebaut aus einer Vielzahl von zu einem oder mehreren Stapeln angeordneten und miteinander verschlungenen einzelnen Blenchen (11, 12; 21, 22; 31, 32; 41, 42; 51, 52; 61, 62), von welchen mindestens ein Teil (12; 22; 32;, 42; 52; 62) zur Bildung der Kanäle (13, 14; 23, 24; 53, 54; 63, 64) etwa parallel zur Strömungsrichtung verlaufende Strukturen aufweist, dadurch gekennzeichnet daß die Strukturen zumindest bei einem Teil dieser strukturierten Bleche (12; 22; 32; 42; 52; 62) sich kontinuierlich oder stufenweise ändernde Strukturhöhen (h1, h2) und/oder Strukturbreiten zur Bildung von Kanälen (13, 14; 23, 24; 53, 54; 63, 64) mit unterschiedlichen Querschnittsflächen aufweisen.

2. Wabenkörper nach Anspruch 1, **dadurch** **gekennzeichnet,** daß die Bleche (11, 12; 21, 22; 31, 32; 41, 42; 51, 52; 61, 62) maximal eine Länge haben, die dem zweifachen Querschnittsumfang des Wabenkörpers entspricht, vorzugsweise eine kleinere Länge als die des Querschnittsumfanges.

3. Wabenkorper nach Anspruch 1, **dadurch** **gekenzeichnet,** daß die einzelnen Bleche (11, 12; 21, 22; 31, 32; 41, 42; 51, 52; 61, 62) kürzer als 50 cm, vorzugsweise kürzer als 30 cm sind.

4. Wabenkörper nach Anspruch 1, 2 oder 3, **dadurch** **gekennzeichnet,** daß zumindest ein Teil der strukturierten Bleche (22; 62) an den Endbereichen kleinere Strukturhohen (h1) und/oder Strukturbreiten aufweist als im mittleren Bereich.

5. Wabenkorper nach Anspruch 1, 2 oder 3, **dadurch** **gekennzeichnet,** daß zumindest ein Teil der strukturierten Bleche (12; 52) an den Endbereichen größere Strukturhöhen (h2) und/oder Strukturbreiten aufweist als im mittleren Bereich.

6. Wabenkörper nach Anspruch 1, 2 oder 3, **dadurch** **gekennzeichnet,** daß die Bleche (22; 32; 42; 62) so angeordnet sind, daß in einem äußeren Bereich des Wabenkörpers kleinere Kanäle (23; 63) vorherrschen und in einem inneren Bereich größere Kanäle (24; 64).

7. Wabenkörper nach Anspruch 1, 2 oder 3, **dadurch** **gekennzeichnet,** daß die strukturierten Bleche (12; 32; 42; 52) so angeordnet sind, daß in einem äußeren Bereich des Wabenkörpers größere Kanäle (14; 54) vorherrschen und in einem inneren Bereich kleinere Kanäle (13; 53), wobei der innere Bereich auch exzentrisch liegen kann.

8. Wabenkörper nach einem der vorhergehenden Ansprüche, **dadurch gekennzeichnet,** daß die Bleche (61, 62) im wesentlichen etwa S-förmig gebogen sind.

9. Wabenkörper nach einem der Ansprüche 1 bis 8, **dadurch gekennzeichnet**, daß die Bleche (51, 52) in drei oder mehr miteinander verschlungenen Stapeln im Inneren des Wabenkörpers angeordnet sind, wobei mindestens drei der Stapel jeweils um Knicklinien geknickt sind.

10. Wabenkörper nach einem der vorhergehenden Ansprüche, **dadurch gekennzeichnet,** daß die Bleche (11, 12; 21, 22; 31, 32; 41, 42; 51, 52; 61, 62) abwechselnd angeordnete annähernd glatte (11; 21; 31; 41; 51; 61) und gewellte (12; 22; 32; 42; 52; 62) Bleche sind, wobei ein Teil der gewellten Bleche (12; 22; 32; 42; 52; 62) mindestens zwei unterschiedliche Wellhöhen (h1, h2) aufweist.

## Claims

1. A honeycombed body, in particular a catalyst carrier body for exhaust gas systems of combustion engines, having passages (13, 14; 23, 24; 53, 54; 63, 64) through which fluid is able to flow in a flow direction, composed of a plurality of individual metal sheets (11, 12; 21, 22; 31, 32; 41, 42; 51, 52; 61, 62) which are arranged to form one or more stacks and which are intertwined, of which metal sheets at least a part (12; 22; 32; 42; 52; 62) have structures which extend approximately parallel to the flow direction in order to form passages (13, 14; 23, 24; 53, 54; 63, 64), characterised in that the structures, at least with a part of these structured metal sheets (12; 22; 32; 42; 52; 62) have structural heights (h1, h2) and/or structural widths which vary continuously or in stages so as to form passages (13, 14; 23, 24; 53, 54; 63, 64) with varying cross-sectional surfaces.

2. A honeycombed body according to Claim 1, characterised in that the metal sheets (11, 12; 21, 22; 31, 32; 41, 42; 51, 52; 61, 62) have a maximum length which corresponds to twice the cross-sectional periphery of the honeycombed body, preferably being less in length than that of the cross-sectional periphery.

3. A honeycombed body according to Claim 1, characterised in that the individual metal sheets (11, 12; 21, 22; 31, 32; 41, 42; 51, 52; 61, 62) are shorter than 50 cm, preferably shorter than 30 cm.

4. A honeycombed body according to Claim 1, 2 or 3, characterised in that at least a part of the structured metal sheets (22; 62) at the end regions are less in structural height (h1) and/or in structural width than in the central region.

5. A honeycombed body according to Claim 1, 2 or 3, characterised in that at least a part of the structured metal sheets (12; 52) at the end regions have a greater structural height (h2) and/or structural width than in the central region.

6. A honeycombed body according to Claim 1, 2 or 3, characterised in that the metal sheets (22; 32; 42; 62) are arranged such that smaller passages (23; 63) predominate in an outer region of the honeycombed body and larger passages (24; 64) predominate in an inner region.

7. A honeycombed body according to Claim 1, 2 or 3, characterised in that the structured metal sheets (12; 32; 42; 52) are arranged such that larger passages (14; 54) predominate in an outer region of the honeycombed body and smaller passages (13; 53) predominate in an inner region, wherein the inner region can also be disposed eccentrically.

8. A honeycombed body according to one of the preceding claims, characterised in that the metal sheets (61, 62) are bent substantially into an approximate S-shaped configuration.

9. A honeycombed body according to one of Claims 1 to 8, characterised in that the metal sheets (51, 52) are arranged in three or more intertwined stacks inside the honeycombed body, wherein at least three of the stacks are bent at bend lines.

10. A honeycombed body according to one of the preceding claims, characterised in that the metal sheets (11, 12; 21, 22; 31, 32; 41, 42; 51, 52; 61, 62) have alternately arranged substantially smooth (11; 21; 31; 41; 51; 61) and corrugated (12; 22; 32; 42; 52; 62) metal sheets, wherein a part of the corrugated metal sheets (12; 22; 32; 42; 52; 62) has at least two different corrugation heights (h1, h2).

## Revendications

1. Corps alvéolaire, en particulier corps support de catalyseur pour systèmes d'échappement de moteurs à combustion interne, avec des canaux (13, 14 ; 23, 24 ; 53, 54; 63, 64) traversables par un fluide dans une direction d'écoulement, construit à partir d'une pluralité de tôles distinctes (11, 12 ; 21, 22 ; 31, 32 ; 41, 42 ; 51, 52 ; 61, 62) configurées en un ou plusieurs empilements et imbriquées entre elles, dont au moins une partie (12 ; 22 ; 32 ; 42 ; 52; 62) desquelles comporte des structures s'étendant approximativement parallèlement à la direction d'écoulement pour former les canaux (13, 14 ; 23, 24; 53, 54; 63, 64), **caractérisé en ce que** les structures présentent au moins sur une partie de ces tôles structurées (12 ; 22 32; 42 ; 52 ; 62) des hauteurs de structure (hl, h2) et/ou des largeurs de structure qui se modifient de façon continue ou par paliers pour former des canaux (13, 14 ; 23, 24 ; 53, 54; 63, 64) avec des surfaces en section droite différentes.

2. Corps alvéolaire selon la revendication 1, **caractérisé en ce que** que les tôles (11, 12 ; 21, 22 ; 31, 32 ; 41, 42 ; 51, 52 ; 61, 62) on au maximum une longueur qui correspond à deux fois l'étendue en section droite du corps alvéolaire, de préférence une longueur plus faible que celle de l'étendue en section droite.

3. Corps alvéolaire selon la revendication 1, **caractérisé en ce** **que** les tôles distinctes (11, 12 ; 21, 22 ; 31, 32 ; 41, 42 ; 51, 52 ; 61, 62) sont plus courtes que 50 cm, de préférence plus courtes que 30 cm.

4. Corps alvéolaire selon la revendication 1, 2 ou 3, **caractérisé** **en ce qu'**au moins une partie des tôles structurées (22 ; 62) présente en région d'extrémité une hauteur de structure (h1) et/ou une largeur de structure plus faible qu'en région médiane.

5. Corps alvéolaire selon la revendication 1, 2 ou 3, **caracté****risé en ce qu**'au moins une partie des tôles structurées (12 ; 52) présente en région d'extrémité une hauteur de structure (h2) et/ou une largeur de structure plus élevée qu'en région médiane.

6. Corps alvéolaire selon la revendication 1, 2 ou 3, **caracté****risé en ce que** les tôles (22, 32 ; 42, 62) sont configurées de telle manière que des petits canaux (23 ; 63) soient prédominants dans une région extérieure du corps alvéolaire et des gros canaux (24; 64) dans une région intérieure.

7. Corps alvéolaire selon la revendication 1, 2 ou 3, **caracté****risé en ce que** les tôles structurées (12, 32 ; 42, 52) sont configurées de telle manière que des gros canaux (14 ; 54) soient prédominants dans une région extérieure du corps alvéolaire et des petits canaux (13; 53) dans une région intérieure, la région intérieure pouvant aussi s'étendre de façon excentrée.

8. Corps alvéolaire selon l'une des revendications précédentes, **caractérisé en ce que** les tôles (61, 62) sont courbées en une forme générale approximative de S.

9. Corps alvéolaire selon l'une des revendications 1 à 8, **ca****ractérisé en ce que** les tôles (51, 52) sont configurées à l'intérieur du corps alvéolaire en trois empilements ou plus imbriqués entre eux, au moins trois des empilements étant pliés chacun autour de ligne de pliage.

10. Corps alvéolaire selon l'une des revendications précédentes, **caractérisé en ce que** les tôles (11, 12 ; 21, 22 ; 31, 32 ; 41, 42 ; 51, 52 ; 61, 62) sont des tôles approximativement lisses (11 ; 21 31 ; 41 ; 51 ; 61) et ondulées (12 ; 22 ; 32 ; 42 ; 52 ; 62) configurées de façon alternée, une partie des tôles ondulées (12 ; 22 ; 32 ; 42 ; 52 ; 62) présentant au moins deux hauteurs d'ondulation (h1, h2) différentes.
